# EUROPEAN PATENT APPLICATION

(11) **EP 2 093 189 A2**
(43) Date of publication of application: **26.08.2009**
(21) Application number: 09152323.3
(22) Date of filing: 06.02.2009
(51) Int. Cl.: C01B 13/02

(54) **Self-serviceable filter for an oxygengenerating device**

(30) Priority: 21.02.2008 US 70917
(71) Applicant: Delphi Technologies, Inc., Troy, Michigan 48007 (US)
(72) Inventor: Youngblood, James H., Highland, MI 48357 (US); McClain, Michael S., Ortonville, MI 48462 (US)
(74) Representative: Denton, Michael John

(57) **Abstract**

An oxygen generating device includes a housing, an inlet formed in the housing, a compressor, and a sieve module. The device further includes a self-serviceable filter disposed between the compressor and the sieve module. The method for generating an oxygen-enriched gas includes introducing a feed gas into the oxygen generating device via the inlet, compressing the feed gas via the compressor, filtering the compressed feed gas by removing at least one contaminant from the feed gas via the self-serviceable filter, introducing the filtered feed gas into the sieve module, and generating the oxygen-enriched gas from the filtered feed gas.

## Description

### TECHNICAL FIELD

The present disclosure relates generally to oxygen delivery and, more particularly, to a method and device for generating an oxygen-enriched gas for a user.

### BACKGROUND OF THE INVENTION

Oxygen generating devices are often used to produce an oxygen-enriched gas for a user. Oxygen generating devices typically include a gas fractionalization system configured to separate oxygen from other components (e.g., nitrogen) in a feed gas to produce the oxygen-enriched gas. The feed gas, in many instances, is air taken from the ambient environment. The gas fractionalization system, for example, may include one or more sieve beds having a nitrogen-adsorption material disposed therein and configured to adsorb at least nitrogen from the feed gas.

The oxygen generating device may be used in a variety of different environments, especially if the device is portable. As such, these devices may be subjected to relatively harsh contaminants present in the feed gas stream. Such contaminants may include, e.g., water vapor, cigarette smoke, spores, bacteria, and/or small particulates that may potentially degrade the operation of various components of the device. Further, these contaminants may contaminate or otherwise potentially compromise the adsorption/desorption capabilities of the nitrogen-adsorption material.

### SUMMARY OF THE INVENTION

An oxygen generating device includes: a housing; an inlet formed in the housing and configured to receive a feed gas including oxygen, nitrogen, and at least one contaminant; a compressor; a sieve module including at least one sieve bed configured to generate an oxygen-enriched gas for a user by adsorbing nitrogen from the feed gas via a nitrogen-adsorption process; and a self-serviceable filter disposed in the oxygen generating system between the compressing means and the sieve module, the self serviceable filter being configured to remove at least a portion of the contaminant(s) from the feed gas.

### BRIEF DESCRIPTION OF THE DRAWINGS

Features and advantages of the present disclosure will become apparent by reference to the following detailed description and drawings, in which like reference numerals correspond to similar, though perhaps not identical components. For the sake of brevity, reference numerals or features having a previously described function may or may not necessarily be described in connection with other drawings in which they appear.

Fig. 1 is a schematic diagram of an exemplary oxygen generating device;

Fig. 2 is an enlarged, semi-schematic front view of an example of a self-serviceable filter suitable for use in an oxygen generating device;

Fig. 3 is a semi-schematic, cross-sectional view of the oxygen generating device taken on line 3-3 of Fig. 2;

Fig. 4 is a semi-schematic, cut-away perspective view of the oxygen generating device;

Fig. 5 is a semi-schematic, cross-sectional view taken on line 5-5 of Fig. 6; and

Fig. 6 is a semi-schematic, exploded perspective view showing the assembly of the self-serviceable filter of Fig. 3 with a support member receivable in the oxygen generating device.

### DESCRIPTION OF THE PREFERRED EMBODIMENTS

Embodiment(s) of the device disclosed herein include a self-serviceable filter disposed between a compressor and a sieve module that advantageously removes at least a portion of the contaminant(s) from a compressed feed gas stream prior to entering the sieve module. After flowing through the filter, at least a portion, if not most, of the contaminant(s) are removed from the compressed gas stream. This substantially prevents the contaminants from flowing into and potentially degrading the operation of various components of the device such as, e.g., valves, sensors, and the sieve beds. Removal of at least a portion of the contaminant(s) also substantially prevents possible deactivation of the nitrogen-adsorption material disposed in the sieve beds that may otherwise occur if contacted with the contaminant(s). The filter used to remove the contaminant(s) from the compressed feed gas stream is also advantageously self-serviceable, thereby being relatively easily changed or serviced by the user. Additionally, the device may be substantially cleaner from removal of the contaminant(s) from the feed gas stream, thereby advantageously aiding in inhibiting the potential growth of bacteria (depending on specific materials selected for the filter member) within the device.

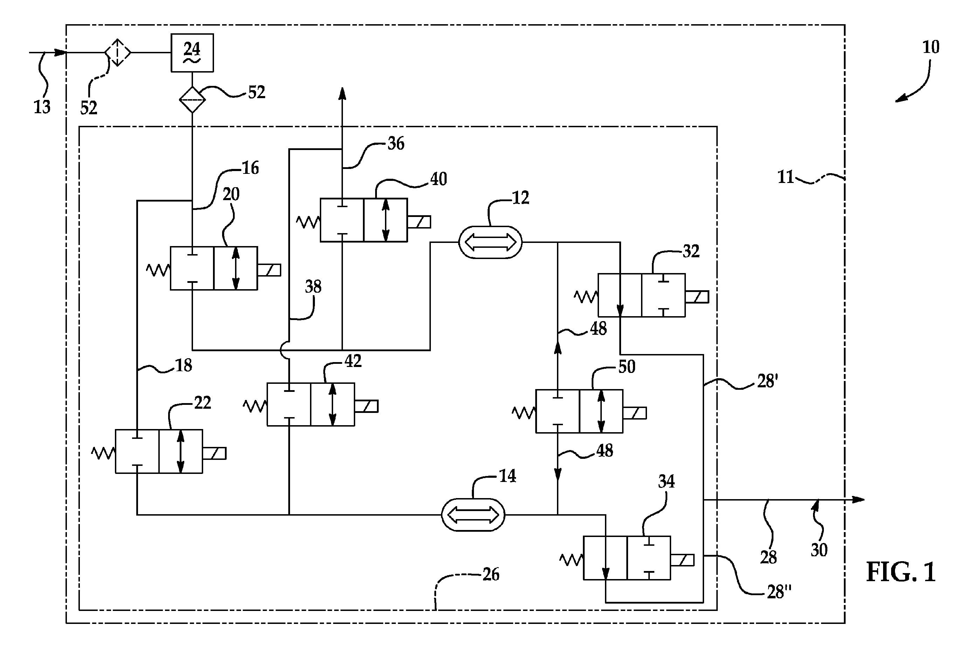

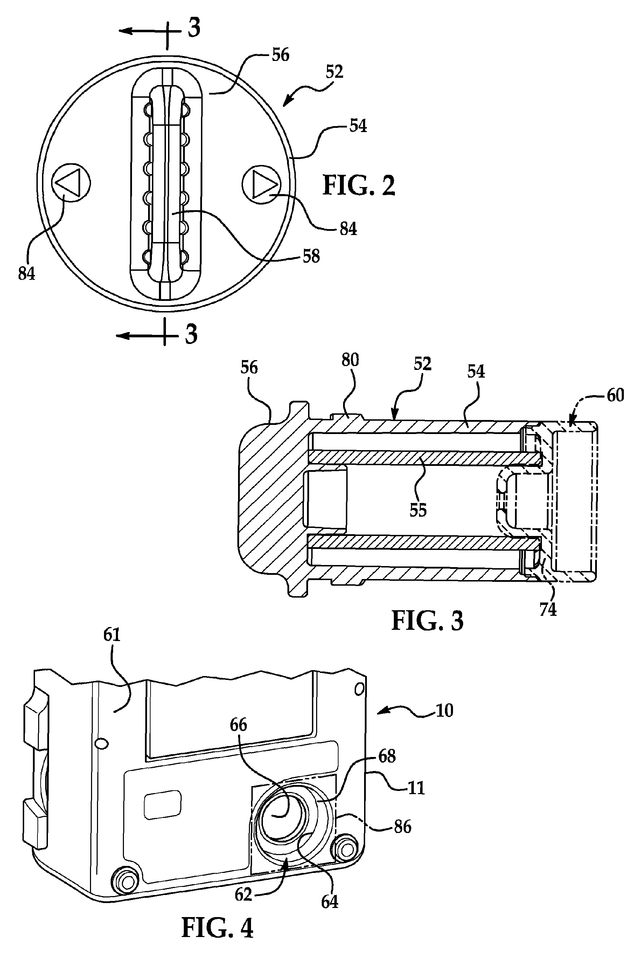

A non-limiting example of an oxygen generating system 10 including a self-serviceable filter 52 is schematically depicted in Fig. 1. One non-limiting example of an oxygen generating system suitable for use with embodiment(s) of the method(s) and device(s) disclosed herein is depicted in Fig. 1. However, it is to be understood that any oxygen generating system may be suitable for use with the embodiment(s) of Figs. 2-6, various examples of which (not shown) are oxygen generating system(s) having fill valves (any suitable combination of 2-way, 3-way, 4-way valves, etc.), vent valves (any suitable combination of 2-way, 3-way, 4-way valves, etc.), a product tank(s), bleed orifice(s) and patient valving.

It is to be understood that the nitrogen-adsorption process employed by the oxygen generating system may be a pressure swing adsorption (PSA) process or a vacuum pressure swing adsorption (VPSA) process, and such processes operate in repeating adsorption/desorption cycles.

The oxygen generating system 10 includes a housing 11 having an inlet 13 formed therein. The inlet is configured to receive a feed gas from the ambient atmosphere, the feed gas including at least oxygen, nitrogen, and at least one contaminant. The contaminant(s) may include at least one or more solid phase components and one or more liquid phase components. Device/system 10 has a gross particulate intake filter (not shown) to trap dust, hair, rocks, leaves, etc. and prevent such contaminants from entering the device 10 before they can reach the compressor suction or intake port. The user serviceable filter 52 of the present disclosure generally filters out airborne particulates to clean the air. The filter 52 generally traps solid contaminants that are suspended in the gas stream. The filter 52 also has the ability to extract or condense water on its fibrous surface, given the tortuous flow path through the filter member and the surface tension properties of water. Filter 52 generally does not trap gas phase contaminants, though it may to some degree. The solid phase contaminants or particulates become embedded, wedged and/or trapped in the fibrous filter surface of the filter member.

The oxygen generating device also includes at least one sieve bed. In the example shown in Fig. 1, the oxygen generating system 10 includes first 12 and second 14 sieve beds, each in selective fluid communication with a feed gas including at least oxygen, nitrogen, and water vapor. In a non-limiting example, the feed gas is air taken from the ambient atmosphere outside of the system 10. In an embodiment, each of the first 12 and second 14 sieve beds are configured to selectively receive the feed gas during a predetermined supply period. The first 12 and second 14 sieve beds may receive the feed gas via first 16 and second 18 supply conduits, respectively.

The first 16 and second 18 supply conduits are generally operatively connected to respective first 20 and second 22 supply valves (or inlet valves). In a non-limiting example, the first 20 and second 22 supply valves are two-way valves. As provided above, the nitrogen-adsorption process employed by the oxygen generating system 10 operates via cycles, where one of the first 12 or second 14 sieve beds vents purge gas (i.e. nitrogen-enriched gas), while the other of the first 12 or second 14 sieve beds delivers generated oxygen-enriched gas to the user. During the next cycle, the functions of the respective sieve beds 12, 14 switch. Switching is accomplished by opening the respective feed gas supply valve 20, 22 while the other of the supply valves 20, 22 is closed. In an embodiment, the opening and/or closing of the first 20 and second 22 supply valves may be controlled with respect to timing of opening and/or closing and/or with respect to the sequence in with the first 20 and second 22 supply valves are opened and/or closed.

In an embodiment, the feed gas is compressed via, e.g., a compressor 24 prior to entering the first 16 or second 18 supply conduits. In a non-limiting example, the compressor is a scroll compressor. Other compressors may also be used, e.g., screw compressors, piston compressors, etc. It is to be understood, however, that compression of the feed gas may be accomplished by any suitable compression means.

After compression, the compressed feed gas is filtered by removing at least a portion of the contaminant(s) from the compressed feed gas stream. In an embodiment, filtering the compressed feed gas is accomplished using a self-serviceable filter 52 disposed between the compressor 24 and the sieve module 26. In alternate embodiments, the filter 52 may be installed before the compressor 24 or intake port of the device 10--in such an embodiment, the filter 52 placement (e.g., as shown in phantom in Fig. 1) may help to maintain compressor life and potentially reduce emitted noise. As referred to herein, a "self-serviceable filter" is a filter configured or otherwise designed in a manner sufficient for the user to change or otherwise service the filter without using tools, outside servicing help, and/or the like. Further description related to the filter 52 and the method of removing the contaminant(s) from the compressed feed gas stream is provided below in connection with Figs. 2-6.

After receiving the filtered, compressed feed gas, the first 12 and second 14 sieve beds are each configured to separate at least most of the oxygen from the feed gas to produce the oxygen-enriched gas. In an embodiment, the first 12 and second 14 sieve beds are each sieve beds 12, 14 including the nitrogen-adsorption material (e.g., zeolite, other similar suitable materials, and/or the like) configured to adsorb at least nitrogen from the feed gas. As schematically shown in phantom in Fig. 1, the sieve beds 12, 14 are operatively disposed in a housing 11 that includes sieve module 26.

In a non-limiting example, the oxygen-enriched gas generated via either the PSA or VPSA processes includes a gas product having an oxygen content ranging from about 70 vol% to about 100 vol% of the total gas product. In another non-limiting example, the oxygen-enriched gas has an oxygen content of at least 87 vol% of the total gas product.

A user conduit 28 having a user outlet 30 is in alternate selective fluid communication with the first and second sieve beds 12, 14. The user conduit 28 may be formed from any suitable material, e.g., at least partially from flexible plastic tubing. In an embodiment, the user conduit 28 is configured substantially in a "Y" shape. As such, the user conduit 28 may have a first conduit portion 28' and a second conduit portion 28", which are in communication with the first sieve bed 12 and the second sieve bed 14, respectively, and merge together before reaching the user outlet 30. The user outlet 30 may be an opening in the user conduit 28 configured to output the substantially oxygen-enriched gas for user use. The user outlet 30 may additionally be configured with a nasal cannula, a respiratory mask, or any other suitable device, as desired.

The first conduit portion 28' and the second conduit portion 28" may be configured with a first user delivery valve 32 and a second user delivery valve 34, respectively. In an embodiment, the first 32 and the second 34 user valves are configured as two-way valves. It is contemplated that when the oxygen-enriched gas is delivered from one of the first and second sieve beds 12, 14, to the user conduit 28, the respective one of the first 32 or second 34 user valves is open. Further, when the respective one of the first 32 or second 34 user valves is open, the respective one of the first 20 or second 22 feed gas supply valves is closed.

The nitrogen-adsorption process selectively adsorbs at least nitrogen from the feed gas. Generally, the compressed feed gas is introduced into one of the first 12 or the second 14 sieve beds, thereby pressurizing the respective first 12 or second 14 sieve bed. Nitrogen and possibly other components present in the feed gas are adsorbed by the nitrogen-adsorption material disposed in the respective first 12 or second 14 sieve bed during an appropriate PSA/VPSA cycle. After: a predetermined amount of time; reaching a predetermined target pressure; detection of an inhalation; and/or another suitable trigger, the pressure of the respective first 12 or second 14 sieve bed is released. At this point, the nitrogen-enriched gas (including any other adsorbed components) is also released from the respective first 12 or second 14 sieve bed and is vented out of the system 10 through a vent port/conduit for the respective first 12 or second 14 sieve bed. As shown in Fig. 1, the nitrogen-enriched gas in the first sieve bed 12 is vented through the vent conduit 36 when a first vent valve 40 is open, and the nitrogen-enriched gas in the second sieve bed 14 is vented through the vent conduit 38 when a second vent valve 42 is open. It is to be understood that venting occurs after each dynamically adjusted oxygen delivery phase and after counterfilling, each of which will be described further below. The gas not adsorbed by the nitrogen-adsorption material (i.e., the oxygen-enriched gas) is delivered to the user through the user outlet 30.

In an embodiment, delivery of the oxygen-enriched gas occurs during or within a predetermined amount of time after the dynamically adjusted oxygen delivery phase from the respective first 12 or second 14 sieve bed. For example, the oxygen delivery system 10 may be configured to trigger an output of a predetermined volume of the oxygen-enriched gas from the sieve bed 12 upon detection of an inhalation by the user. Detection of an inhalation may be accomplished by any suitable means. The predetermined volume, which is at least a portion of the oxygen-enriched gas produced, is output through the user conduit 28 and to the user outlet 30 during a respective dynamically adjusted oxygen delivery phase.

The first 12 and second 14 sieve beds are also configured to transmit at least a portion of the remaining oxygen-enriched gas (i.e., the oxygen-enriched gas not delivered to the user during the delivery phase to the user outlet 30), if any, to the other of the first 12 or second 14 sieve bed. This also occurs after each respective dynamically adjusted oxygen delivery phase. The portion of the remaining oxygen-enriched gas may be transmitted via a counterfill flow conduit 48. The transmission of the remaining portion of the oxygen-enriched gas from one of the first 12 or second 14 sieve beds to the other first 12 or second 14 sieve beds may be referred to as "counterfilling."

As shown in Fig. 1, the counterfill flow conduit 48 may be configured with a counterfill flow valve 50. In a non-limiting example, the counterfill flow valve 50 is a two-way valve. The counterfill flow valve 50 is opened to allow the counterfilling of the respective first 12 and second 14 sieve beds.

With reference now to Figs. 2, 3 and 6, the self-serviceable filter 52 includes a casing 54 surrounding a filter member 55. The casing 54 includes a top portion 56 having a user interface feature 58 disposed thereon or otherwise formed therein. The user interface feature 58 is selected and positioned on/in the top portion 56 in a manner sufficient to allow the user to access the filter 52 and to service it without using a tool or other outside servicing help. Non-limiting examples of suitable user interface features 58 include a handle, a knob, a grip, a ring, a pin, and/or the like, and/or combinations thereof. In the embodiment depicted in Figs. 2 and 3, the user interface feature 58 is a knurled handle.

Top portion 56 may further include one or more position indicating members 84 configured to indicate a desired position (e.g. "installed"). The position indicating members 84 may be any suitable device, for example, lighting devices (e.g. LEDs) that selectively indicate a position through change of color, marker members adapted to align with corresponding marker members (not shown) on the system 10, and/or the like.

In a non-limiting example, the filter member 55 of the self-serviceable filter 52 has a filter rating ranging from about 0.01 µm to about 10 µm; and in another embodiment, has a filter rating of about 0.3 µm or smaller. In a further non-limiting example, the self-serviceable filter has an efficiency of 97% or greater. Without being bound to any theory, it is believed that a filter having a filter rating of 0.3 µm or smaller allows the filter to act as a coalescing element, thereby extracting at least a portion of the liquid phase contaminants (e.g., water), and retaining at least a portion of the solid phase components (e.g., particulates) from the compressed feed gas stream. It is further believed that removal of at least these contaminants from the compressed feed gas stream prior to entering the sieve module 26 substantially prevents binding or plugging of various components of the system 10 including, but not limited to, the supply valves 20, 22, the user valves 32, 34, the vent valves 40, 42, the counterfill valve 50, the sieve beds 12, 14, and/or other various sensors, e.g., pressure sensors, temperature sensors, etc. Also, the contaminant(s) may degrade or possibly deactivate the nitrogen-adsorption material disposed in the sieve beds 12, 14. This degradation and/or deactivation may, in some instances, deleteriously affect the nitrogen-adsorption process and produce an oxygen-enriched gas potentially having a lower oxygen content than desired.

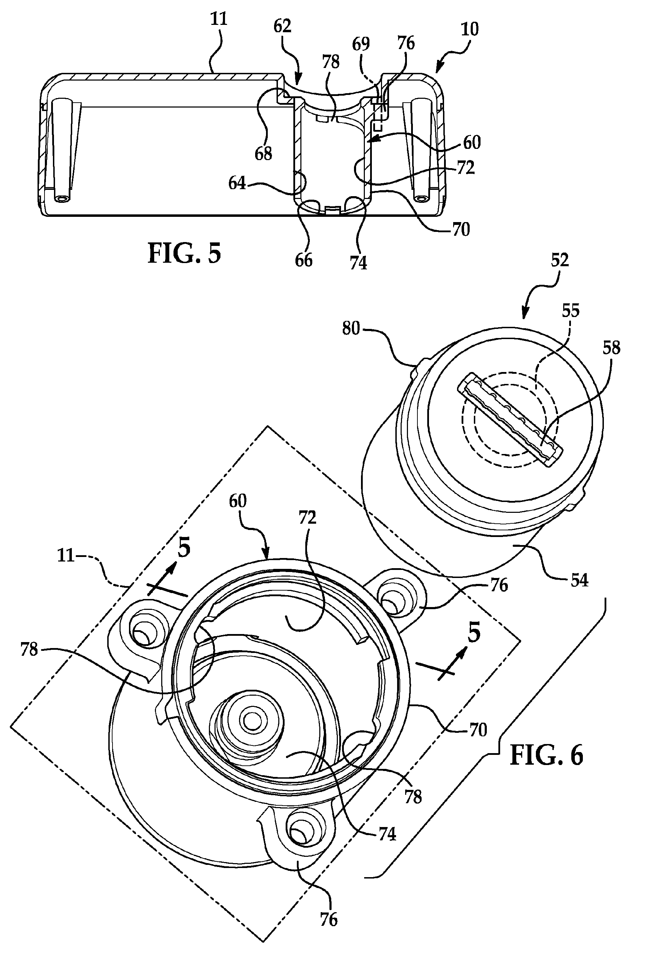

With reference now to Fig. 3-5, the filter 52 is disposed in the oxygen generating system 10 by disposing the filter 52 in a support 60, which is operatively disposed in a receptacle 62 formed in a desired location (e.g., a bottom side) 61 of the housing 11. As shown in Figs. 4 and 5, the receptacle 62 is defined by a substantially continuous wall 64 and a base 66. An annular flange 68 is also formed in the housing 11, substantially integrally with the wall 64 and surrounding the receptacle 62. The flange 68 is configured to connect the support 60 to the receptacle 62. In a non-limiting example, the support 60 is connected to the receptacle 62 via a fastening member 69, e.g. bolts, rivets, welds, and/or the like.

As shown in Figs. 3 and 5-6, the support 60 includes a body 70 having a continuous inner wall 72 and a base 74. The support 60 includes at least one connecting feature 76 configured to connect with the flange 68 (e.g., via fastening member 69), thereby operatively disposing the support 60 inside the receptacle 62.

The support 60 further includes at least one engagement feature 78 configured to engage at least one complementary engagement feature 80 of the self-serviceable filter 52 when the filter 52 is received in the support 60. In a non-limiting example, the engagement feature 78 is selected from a groove formed in the continuous wall 72, a fitting attached to the continuous wall 72, or a combination thereof, and the complementary engagement feature 80 is about a quarter turn cam feature formed in or attached to the filter 52. As shown in Fig. 6, the quarter turn cam feature 80 is configured to engage the groove or fitting 78 so as to operatively dispose the filter 52 in the support 60. Although about a quarter turn is recited above as an example, it is to be understood that any desired angular revolution may be used, e.g. 135°, 180°, 270°, 360°, from about 10° to about 350°, and/or any desired angle.

As provided above, the self-serviceable filter 52 is configured to allow the user to easily remove the filter 52 from the system 10 for servicing and to either install a new filter member 55 or replace the old filter member 55 after cleaning it. As provided above, the filter 52 is serviceable by the user without the user having to use one or more tools or to acquire outside servicing help in order to access the filter 52, to remove the filter 52, to insert a new filter 52, and combinations thereof. In order to accomplish this, the self-serviceable filter 52 is accessible to the user by opening a door 86 (shown in phantom in Fig. 4) in the housing 11. In another embodiment, the self-serviceable filter 52 is accessible to the user without having to remove the housing 11 or a portion thereof.

To service the self-serviceable filter 52, an example of the method includes removing a previously installed filter 52 from the support 60 by turning the filter 52 about a quarter of a complete revolution (or any desired angular revolution) in a first direction, thereby disengaging the previously installed filter 52 from the support 60. This is accomplished by engaging the user interface feature 58 on the filter 52, and turning the user interface feature 58 in the first direction through a desired angular revolution.

In this example, once the previously installed filter 52 is removed from the support 60, the user obtains a replacement (or cleaned) filter 52 and inserts the replacement/cleaned filter 52 in the support 60, e.g., by turning the replacement filter 52 in the support 60 through the desired angular revolution in a second direction opposed to the first direction. This is accomplished by engaging the user interface feature 58, and turning the user interface feature 58 in the second direction.

It is to be understood that the terms "connect/connected" and "engage/engaged" are broadly defined herein to encompass a variety of divergent connection and engagement arrangements and assembly techniques. These arrangements and techniques include, but are not limited to (1) the direct connection or engagement between one component and another component with no intervening components therebetween; and (2) the connection or engagement of one component and another component with one or more components therebetween, provided that the one component being "connected to" or "engaged to" the other component is somehow operatively connected to the other component (notwithstanding the presence of one or more additional components therebetween).

While several embodiments have been described in detail, it will be apparent to those skilled in the art that the disclosed embodiments may be modified and/or other embodiments may be possible. Therefore, the foregoing description is to be considered exemplary rather than limiting.

## Claims

1. An oxygen generating device, comprising:
a housing;
an inlet formed in the housing and configured to receive a feed gas including oxygen, nitrogen, and at least one contaminant; a compressor;
a sieve module including at least one sieve bed configured to generate an oxygen-enriched gas for a user by adsorbing nitrogen from the compressed feed gas via a nitrogen-adsorption process; and
a self-serviceable filter disposed in the oxygen generating system between the compressor and the sieve module, the self-serviceable filter being configured to remove at least a portion of the at least one contaminant from the compressed feed gas.

2. The oxygen generating device as defined in claim 1 wherein the self-serviceable filter has a filter rating of about 0.3 µm or smaller.

3. The oxygen generating device as defined in claim 1 wherein the at least one contaminant includes at least one liquid phase component and at least one solid phase component, and wherein the self-serviceable filter is further configured to extract at least a portion of the at least one liquid phase component from the feed gas and to retain at least a portion of the at least one solid phase component from the feed gas.

4. The oxygen generating device as defined in claim 1 wherein the self-serviceable filter is disposed in the oxygen generating device in a manner sufficient to allow a user to access the filter: by opening a door in the housing; or without removing at least a portion of the housing.

5. The oxygen generating device as defined in claim 4 wherein the housing includes a receptacle formed therein, the receptacle being defined by a substantially continuous wall and a base.

6. The oxygen generating device as defined in claim 5, further comprising a support configured to be disposed in the receptacle, and wherein the support is further configured to receive the self-serviceable filter.

7. The oxygen generating device as defined in claim 6 wherein the support includes at least one engagement feature configured to engage at least one complementary engagement feature of the self-serviceable filter when the self-serviceable filter is received in the support.

8. The oxygen generating device as defined in claim 7 wherein the engagement feature of the support is selected from a groove formed in the substantially continuous wall, a fitting attached to the substantially continuous wall, or a combination thereof.

9. The oxygen generating device as defined in claim 8 wherein the at least one complementary engagement feature of the self-serviceable filter is a quarter turn cam feature formed therein or attached thereto, and wherein the quarter turn cam feature is configured to engage at least one of the groove or the fitting.

10. The oxygen generating device as defined in claim 1 wherein the self-serviceable filter includes a user interface feature selected from a handle, a knob, a grip, a ring, a pin, and combinations thereof.

11. A method of generating an oxygen-enriched gas for a user via an oxygen generating device, the oxygen generating device including a housing including a sieve module disposed therein, wherein the sieve module includes at least one sieve bed having a nitrogen-adsorbing material disposed therein and configured to adsorb nitrogen from a feed gas introduced into the at least one sieve bed, the feed gas including at least nitrogen, oxygen, and at least one contaminant, the method comprising:
introducing the feed gas into the oxygen generating device via an inlet;
compressing the feed gas via a compressor;
filtering the compressed feed gas by removing the at least one contaminant from the compressed feed gas via a self-serviceable filter, the self-serviceable filter being disposed in the oxygen generating device between the compressor and the sieve module;
introducing the filtered feed gas into the sieve module; and
generating the oxygen-enriched gas from the filtered feed gas.

12. The method as defined in claim 11 wherein the self-serviceable filter is disposed in the oxygen generating device in a manner sufficient to allow a user to access the filter: by opening a door in the housing; without removing at least a portion of the housing; or combinations thereof.

13. The method as defined in claim 11 wherein the at least one contaminant includes at least one liquid phase component and at least one solid phase component, and wherein the method further comprises:
extracting at least a portion of the at least one liquid phase component from the compressed feed gas via the self-serviceable filter; and
retaining at least a portion of the at least one solid phase component from the compressed feed gas in the self-serviceable filter.
